# EUROPEAN PATENT SPECIFICATION

(11) **EP 0 572 757 B1**
(45) Date of publication and mention of the grant of the patent: **13.03.1996**
(21) Application number: 92850123.8
(22) Date of filing: 01.06.1992
(51) Int. Cl.: C02F 1/52, C02F 1/00, C02F 9/00

(54) **Method to process sour humus containing water**
Verfahren, um saures Humus enthaltendes Wasser zu behandeln
Méthode de traitement d'eau contenant de l'humus acide

(43) Date of publication of application: 08.12.1993
(73) Proprietor: UNIK FILTERSYSTEM ApS, DK-6000 Kolding (DK)
(72) Inventor: Boge, Jarle, DK-5200 OS (DK)
(74) Representative: Roth, Ernst Adolf Michael

(56) References cited:
- EP-A- 0 056 117
- EP-A- 0 343 998
- EP-A- 0 371 187
- WO-A-91/08174
- DE-A- 4 025 606
- FR-A- 2 325 608
- GB-A- 2 004 535
- US-A- 4 659 463
- US-A- 5 092 993

## Description

The present invention refers to a method of cleaning sour, humus containing crude water to drinking water, through direct filtering in basic filter mass.

Water of the above mentioned kind is common in Norway and for the rest in large parts of the industrialized world, because of increased consumption of fossile fuels and resulting sour precipitation and souring influence on lakes and rivers. At decomposition of plant remainders in and around streams humus substances are generated which give the water a yellow-brown colour.

For the consumer, sour humus containg water creates problems since
-- sour water dissolves pipe and armatures components such that the contents of the water of e.g. heavy metals is increased and represents a risk to the health, pipe corrosion also reduces the life time of a network and entails large expenses to the owner of the plant,
-- yellow - brown water is not tempting as drinking water, and water with a high color index may cause miscolouring of white laundry, and
--humus containing water will make satisfactory disinfektion difficult when using the most common methods. The use of chlorine may generate chlorine containing and possibly organic compounds which can be injurious to health, while an increased humus content will make it necessary to add increased amounts of chlorine, which also goes for the use of ozone as a disinfektion agent. An increased content of humus also reduces trhe permeability for UV(ultraviolet)- beams.

In order to convert sour humus containing crude water to good drinking water, three different conditions have to be fulfilled namely
1. the humus substances should be removed, such that the water will be clear and without colour,
2. the pH - value should be increased. and
3. the alkalinity should be increased by adding of mineral salt
It has since long been known to process crude water by depositing in clear basins and direct precipitation on a common quartz/granite filter.

This method is not suitable to process water with a color index higher than 40, since the reduction effect obtained exclusively is between 10 and 20 on the colour scale. Another method which is known is to provide a coagulation effect by means of aluminium salts. The method i. a. has a drawback, that even if humus containing (organic) particles or colour substances in this way is removed from the water, the water quality will not be improved, but on the contrary deteriorated, since aluminium sulphate is used as a filler agent. In several reports, i. a. from the World Health Organization, the use of aluminium sulphate is valued as injurious to health and a possible cause of presenility and brain cancer. In the district of Bergen in more than one occasion a possible relation between brain cancer and use of drinking water with a very high content of aluminium sulphate.

As a result of information gathered, i. a. from the Norweigan "Naeringsmedelkontrollen" in the run of the last twenty years no epoch-making innovations have emerged within the water purifying technique.

Thus the object ot the present invention is to provide a method and a purifying plant for conversion of sour and humus containing crude water to good drinking water, without use of aluminium sulphate as a precipitation means.

Therefore the applicant in cooperation with "Norsk Institutt for Vannforskning (NIVA), has developed a completely unique method for purifying of sour and humus containing crude water, which is characterized in that the crude water is filtered in a micro wheel filter and that filtered out coarse particles are transmitted to a collecting unit, and the return water stream is added a coagulation means in the form of a mineral salt for precipitation of humus particles. Further the water stream is lead through a filter for pH- and alkaline increase and adsorption with charge neutralization of the colloids in the filter. The water stream is finally led to a high efficiency UV-aggregate to neutralize bacteria and virus. The filter which is used is a stone filter of basic type, and filtering, precipitation and increase in pH and alkaline is carried out in one and the same process step.

It is a feature of the invention that the precipitation whereby the water is released from humus-, iron -, and aluminium containing particles, is carried out on basic material, in contrast to the most commonly used method which is based on the use of aluminium sulphate which, as earlier mentioned, is regarded to be injurious to health.

Another feature of the invention is that for said stages 1 - 3 is carried out in the run of one and the same process step.

It is a further feature of the invention that crude water with very high colour index will be purified in a satisfactory way, and that the same process handles crude water with colour indices varying from 20 and higher. From those skilled in the art it has been earlier maintained that such a method is not suitable for purifying of water with a colour index over 100. Tests carried out recently show however, that when using the method according to the invention, water with a colour index up to 225 can be purified without problem to a colour index between 0 and 5.

The flow diagram for a purifying plant which can be used for the performance of the method according to the invention can be described as following:

Through an intake A unpurified crude water is lead to a wheel filter unit B. From this micro-wheel coarse particles filtered out to a collecting unit C with an outlet D. From the filter unit B the water is lead to a basic rockfilter, concurrently adding mineral salt from a dosing unit E. After having passed trhrough the alkaline rock filter F which is provided with a return flush device G, water of increased pH- value and increased alkalinity will flow through the highly efficient UV-aggregate H wherein bacteria and virus are eliminated, and leave the purifying plant through the outlet I.

## Claims

1. Method to purify and disinfect sour and humus containing water for use as drinking water, where
(a) the water is filtered in a micro-wheel filter and coarse particles filtered out are transmitted to a collecting unit,
(b) a coagulant is added in the form of mineral salt for precipitation of humus particles,
(c) the water stream is lead through a filter for pH- and alkalinity increase and adsorbtion with charge neutralizing of the colloids in the filter,
(d) the water stream is finally lead to a highly efficient UV-aggregate for elimination of bacteria and virus,
**characterized therein**,
that the filter used in step (c) is a basic rock filter and that the filtration through the rock filter, the precipitation and the increase in alkalinity is carried out in one and the same process step.

## Patentansprüche

1. Verfahren zur Reinigung und Desinfizierung sauren und humushaltigen Wassers mit dem Ziel der Benutzung als Trinkwasser, wobei
(a) das Wasser in einem Mikroradfilter gefiltert wird und grobe herausgefilterte Teilchen zu einer Sammeleinheit befördert werden,
(b) zur Ausfällung von Humusteilchen ein Koagulierungsmittel in Form eines Mineralsalzes zugesetzt wird,
(c) der Wasserstrom durch einen Filter geleitet wird zur Erhöhung des pH-Werts und der Alkalinität und Absorption mit Ladungsneutralisation der Kolloide im Filter,
(d) der Wasserstrom schließlich zu einem hochwirksamen UV-Aggregat zur Beseitigung von Bakterien und Viren geleitet wird,
dadurch gekennzeichnet, daß der in Schritt (c) benutzte Filter ein basischer Gesteinsfilter ist und die Filtrierung durch den Gesteinsfilter, die Ausfällung und die Erhöhung der Alkalinität in ein und demselben Schritt des Prozesses erfolgen.

## Revendications

1. Procédé de purification et de désinfection d'eau contenant de l'humus acide à utiliser comme eau potable, où
(a) l'eau est filtrée dans un filtre à microroue et les particules grossières séparées sont transmises à une unité de recueil,
(b) un coagulant sous forme d'un sel minéral est ajouté en vue de la précipitation des particules d'humus,
(c) le courant d'eau est acheminé sur un filtre en vue de l'élévation du pH et de la basicité et de l'adsorption avec neutralisation de la charge des colloïdes dans le filtre,
(d) le courant d'eau est finalement acheminé à un agrégat UV très performant en vue de l'élimination des bactéries et des virus,
caractérisé en ce que le filtre utilisé à l'étape (c) est un filtre de pierre basique et en ce que la filtration sur le filtre de pierre, la précipitation et l'élévation de la basicité sont effectuées au cours d'une seule et même étape de procédé.
